# FASCICULE DE BREVET EUROPEEN

(11) **EP 0 571 291 B1**
(45) Date de publication et mention de la délivrance du brevet: **25.03.1998**
(21) Numéro de dépôt: 93401305.3
(22) Date de dépôt: 19.05.1993
(51) Int. Cl.: H04M 3/38, H04M 1/66, H04M 1/68

(54) **Dispositif pour le contrôle de l'accès à une ligne téléphonique**
Gerät zur Zugriffskontrolle auf eine Fernsprechleitung
Telephone line access control device

(30) Priorité: 22.05.1992 FR 9206316
(43) Date de publication de la demande: 24.11.1993
(73) Titulaire: FRANCE TELECOM, 75015 Paris (FR)
(72) Inventeur: Corneux, Michel, F-52000 Chaumont (FR)
(74) Mandataire: Armengaud Ainé, Alain

(56) Documents cités:
- FR-A- 2 596 937
- US-A- 4 270 024
- US-A- 4 436 957
- US-A- 4 926 470

## Description

La présente invention est relative à un dispositif qui permet de contrôler de façon sûre et permanente l'accès à une ligne téléphonique, notamment pour autoriser sur celle-ci un appel à destination d'un usager quelconque via un central de commutation de telle sorte que seul l'abonné auquel est attribuée cette ligne, ou toute personne dûment autorisée par lui, puisse effectuer un tel appel, alors que, en revanche, tout intervenant se branchant de façon illicite sur cette ligne soit automatiquement placé dans l'impossibilité de l'utiliser.

L'invention a donc pour objet d'empêcher toute faculté de branchement illicite sur une ligne d'abonné, en n'autorisant l'émission d'appels sur la ligne que pour l'abonné lui-même ou par toute autre personne à condition qu'elle soit habilitée à utiliser cette ligne à partir de sa propre installation.

On sait en effet qu'entre le central téléphonique qui distribue les appels des abonnés entre eux, le cas échéant par l'intermédiaire de centraux différents convenablement connectés pour relier à chaque fois le poste appelant et le poste appelé, sont disposés sur la ligne de l'abonné appelant notamment des boîtiers de répartition et des réglettes de départ, à partir desquels plusieurs lignes réunies au central sont reliées à un groupement d'installations individuelles d'abonnés divers appartenant à un secteur géographique déterminé, puis à l'intérieur de celui-ci, à chacune de ces installations séparément. Il est donc possible qu'un tiers non autorisé se branche sur un tel boîtier ou sur une réglette de ce genre, en parallèle sur une ligne d'abonné, de façon à shunter cette dernière, ou en l'isolant et en s'y substituant, d'une manière telle que le central téléphonique ne puisse pas distinguer entre le branchement normal de la ligne de l'abonné et la connexion parasite, le tiers indélicat pouvant dans ces conditions utiliser la ligne frauduleusement aux lieu et place de l'abonné qui ne peut s'en apercevoir, sauf au moment où il est invité à régler la facture correspondant à l'utilisation de sa ligne.

On conçoit donc l'intérêt d'un dispositif qui évite automatiquement, non pas qu'un tel branchement puisse être matériellement effectué, ce qui exigerait un contrôle permanent de l'intégrité des lignes et des boîtiers et réglettes, mais au moyen de ce dispositif, qu'un appel téléphonique provenant d'un tiers illicitement branché sur la ligne ne puisse être acheminé, seuls étant autorisés les appels provenant de l'abonné régulier.

Notamment, pour assurer cette discrimination entre les appels autorisés ou non, on prévoit de disposer au central téléphonique un appareil apte à distinguer ces appels et à ne connecter la ligne sur ce central que si l'usager autorisé à fait précéder la numérotation d'appel d'un autre abonné avec lequel il désire communiquer d'un signal représentatif d'un code prédéterminé, que le tiers auteur d'un branchement frauduleux ne peut naturellement fournir, de telle sorte que celui-ci ne peut alors obtenir un accès à la ligne. En d'autres termes, l'appareil prévu au central est aménagé pour identifier l'installation de l'usager et ne connecter la ligne que seulement si l'appel provient réellement et exclusivement de l'abonné régulier.

Un tel appareil dont un mode de réalisation peut être trouvé dans le FR-A-2 596 937 est assimilable de façon tout à fait schématique à un interrupteur qui ferme le circuit de la ligne en cas uniquement de reconnaissance préalable de l'identité de l'usager et de l'appel provenant de celui-ci, en écartant au contraire toute possibilité de connexion de la ligne utilisée frauduleusement par un tiers.

La présente invention a pour objet un dispositif qui permet, lorsque l'usager d'une ligne dûment autorisé, veut appeler le numéro d'un correspondant quelconque, de détecter l'origine de cet appel, puis dans ce cas, de générer automatiquement le signal représentatif du code prédéterminé pour provoquer la fermeture de la ligne par la mise en oeuvre de l'appareil précité, en assurant alors l'acheminement de l'appel émanant de l'abonné. A fortiori, lorsque l'appel provient d'une autre personne, frauduleusement branchée sur l'installation, l'absence d'émission du signal représentatif du code prédéterminé empêche la connexion de la ligne aboutissant à l'installation.

A cet effet, le dispositif considéré, pour une installation privée d'abonné au téléphone comprenant une ligne raccordée à au moins un poste ou terminal appartenant à ladite installation, comporte un détecteur de tension de sonnerie d'appel dudit poste et un détecteur du courant dans la ligne, créé lorsque ledit poste est décroché, ces détecteurs étant respectivement montés en parallèle et en série sur la ligne, le dispositif comportant en outre un circuit de contrôle et de commande, adapté à reconnaître et différencier, au moyen d'un code confidentiel, un appel à l'arrivée acheminé sur la ligne à destination de l'abonné, toujours transmis au poste récepteur, et un appel au départ émanant de l'abonné, se caractérise en ce que, pour un tel appel au départ et pour celui-ci seulement, un contact d'un relais monté sur la ligne est automatiquement ouvert en introduisant en série sur celle-ci un circuit de composition d'un code d'accès prédéterminé, stocké dans une mémoire et propre à commander le basculement d'un appareil de connexion raccordant la ligne au central téléphonique, l'envoi dudit code d'accès précédant dans le temps la formation d'un numéro d'appel à partir du poste terminal, le signal correspondant pouvant alors être transmis sur la ligne vers ledit central.

En d'autres termes, le dispositif selon l'invention est constitué de manière à ce que, au décroché de l'un quelconque des postes ou terminaux de l'installation de l'abonné, pour émettre un appel créant un courant dans la ligne, soit immédiatement déclenché un circuit propre à émettre sur ladite ligne un code d'accès stocké en mémoire, assurant la mise en oeuvre d'un appareil de connexion prévu au central et réalisant le branchement de la ligne, après contrôle de ce code. A l'inverse, le dispositif est prévu de telle sorte que, pour tout appel vers l'abonné, acheminé sur sa ligne, se manifestant en premier lieu par l'émission d'un courant alternatif déclenchant la sonnerie du poste appelé, le contact du relais monté sur la ligne reste fermé, le circuit de composition du code n'étant pas mis en oeuvre, l'abonné pouvant dans ce cas recevoir ledit appel, quelle que soit l'origine de celui-ci.

Selon une disposition préférée, le circuit de détection de la tension de sonnerie comporte un condensateur et une résistance en série avec un pont de diodes, dont le signal de sortie à double alternance est filtré par un condensateur, la tension résultante alimentant au travers d'une résistance la diode d'entrée d'un photocoupleur dont le phototransistor conduit au rythme des signaux successifs de la sonnerie d'appel.

De même et selon une autre disposition avantageuse, le circuit de détection du courant de ligne est constitué de deux photocoupleurs à phototransistors, dont les diodes d'entrée sont montées en anti-parallèle, leurs sorties étant reliées en parallèle, de telle sorte que la conduction de l'une ou l'autre de ces diodes selon la polarité relative des fils de la ligne, soit assurée, en fournissant un signal de sortie au circuit de contrôle et de commande.

Dans un premier mode de réalisation de l'invention, l'ensemble formé par les circuits de détection de tension de sonnerie, de détection de courant de ligne, de contrôle et de commande, déclenchant le circuit de composition du code d'accès au décroché du poste ou terminal, est indépendant et commun à l'ensemble des postes ou terminaux de l'installation montés en aval.

Avantageusement, le circuit de contrôle et de commande est monté avec les circuits de détection de tension de sonnerie d'appel et de courant de ligne, dans un ensemble raccordé au point de liaison de la ligne et de l'installation téléphonique de l'abonné ou au niveau de la première prise de conjoncteur, en aval de l'arrivée de la ligne à l'installation, les divers postes de celle-ci étant alors en série.

En variante et dans un autre mode de réalisation, chaque poste ou terminal de l'installation comprend un tel circuit de contrôle et de commande, apte à fournir le code d'accès à la ligne à partir d'une mémoire intégrée dans chaque poste.

Avantageusement, le circuit de contrôle et de commande comporte au moins une bascule, associée à un circuit de temporisation et agencée de telle sorte que, en présence d'un signal issu du détecteur de tension de sonnerie d'appel, puis d'un signal ultérieur provenant du détecteur de courant de ligne, caractérisant un appel à l'arrivée, ladite bascule soit inerte, les circuits étant transparents à l'égard d'un tel appel. En revanche, la bascule du circuit de contrôle et de commande est aménagée de telle sorte que, en l'absence d'un signal issu du détecteur de tension de sonnerie et en présence d'un signal provenant du détecteur de courant de ligne, caractérisant un appel au départ de l'installation, elle fournisse un signal de commande qui, après amplification, commande le relais ouvrant le contact monté dans la ligne pour actionner le circuit de composition du code à envoyer sur cette ligne, préalablement à la composition du numéro d'appel.

Selon une caractéristique particulière de l'invention, le circuit de contrôle et de commande comporte une seconde bascule, en série avec la première et également associée avec un circuit de temporisation tel que le code élaboré par le circuit de composition ne soit délivré sur la ligne qu'après l'ouverture du contact du relais monté sur la ligne, ce code étant établi dans un circuit spécialisé, alimenté par le courant de ligne et comprenant une mémoire de stockage, notamment selon la numérotation dite DTMF (Dual Tone Multi Frequencies).

De préférence, le circuit de composition du code d'accès comporte un clavier de commande pour introduire en mémoire le code choisi, préalablement déterminé. Avantageusement, le circuit de composition du code comprend une pile d'alimentation électrique, propre à alimenter le circuit et permettre la conservation de ce code mémorisé, en dehors des périodes d'appel.

Selon une autre caractéristique particulière, le circuit de composition du code d'accès comporte un amplificateur des fréquences DTMF, disposant d'un potentiomètre d'ajustage du niveau du signal, de telle sorte que celui-ci puisse être convenablement reçu par l'appareil de connexion raccordant la ligne au central téléphonique.

Dans un autre mode de réalisation, le circuit de composition du code d'accès est intégré à chaque poste ou terminal et est associé à deux temporisateurs à portes ET en parallèle, délivrant des signaux décalés dans le temps avec des intervalles ajustables par des ensembles de résistances-capacités, ces signaux étant amplifiés chacun dans un étage à transistor pour actionner successivement et par impulsions les relais fermant l'un après l'autre les contacts des touches d' envoi de la numérotation du code d'accès prédéterminé mémorisé.

Avantageusement, un témoin visuel, permettant de contrôler le déroulement du cycle de mise en oeuvre du dispositif, est connecté en sortie des temporisateurs à portes ET.

D'autres caractéristiques d'un dispositif pour le contrôle de l'accès à une ligne téléphonique, apparaîtront encore à travers la description qui suit deux exemples de réalisation, donnés à titre indicatif et non limitatif, en référence aux dessins annexés sur lesquels :
- La Figure 1 est un schéma de principe, permettant de préciser les fonctions mises en oeuvre avec le dispositif.
- La Figure 2 est une vue de détail à plus grande échelle, des divers circuits entrant dans la réalisation du dispositif, dans une première variante d'exécution.
- La Figure 3 est un schéma analogue à la Figure 2, relatif à une autre variante de réalisation.

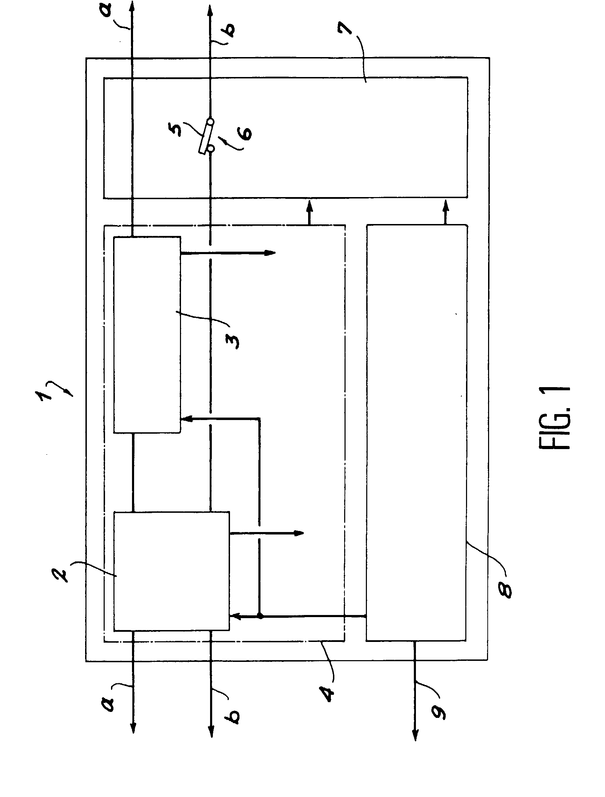

Sur la Figure 1, on a représenté de façon schématique le dispositif pour le contrôle d'accès à une ligne téléphonique, ce dispositif étant monté à l'intérieur d'un boîtier désigné dans son ensemble sous la référence 1.

Sur ce boîtier se raccordent les fils a et b d'une ligne téléphonique, desservant une installation privée pour un abonné, les sorties de la ligne au-delà du boîtier étant raccordées dans l'installation à un ou plusieurs postes ou terminaux téléphoniques analogues ou non, (non représentés sur les dessins), montés en aval.

Le boîtier 1 comporte plusieurs circuits, permettant, conformément à l'invention, d'une part de laisser passer dans tous les cas les appels téléphoniques arrivant sur la ligne en provenance du central téléphonique auquel celle-ci est raccordée, et d'autre part de n'autoriser le passage sur cette ligne en sens inverse d'un appel au départ, effectué à partir d'un des postes ou terminaux de l'installation qu'après envoi automatique sur cette ligne d'un code d'accès prédéterminé. Comme déjà exposé, ce code permet de mettre en oeuvre, au central ou en tous cas au-delà des boîtiers de connexion et réglettes de répartition prévus sur la ligne entre l'installation considérée et le central, un appareil de connexion de la ligne (non représenté), agencé de telle sorte qu'un appel effectué au moyen d'un branchement frauduleux réalisé sur l'un quelconque de ces boîtiers ou réglettes par un tiers qui ignore le code d'accès, ne puisse aboutir, l'appareil de connexion n'étant pas activé.

Le boîtier 1 comporte ainsi un circuit 2 de détection de la tension créée entre les fils a et b de la ligne lors de l'envoi dans celle-ci d'un courant alternatif à 50 Hz, déclenchant la sonnerie de l'installation, en manifestant l'arrivée sur la ligne d'un appel extérieur, ce circuit étant monté en parallèle sur ces fils. Un second circuit 3 est disposé après le circuit 2 mais en série sur la ligne, ce circuit 3 étant prévu pour détecter la présence d'un courant continu dans la ligne, établi lorsque l'un au moins des postes ou terminaux de l'installation est décroché, soit en réponse à une sonnerie d'appel, soit pour former sur le clavier de ce poste un numéro d'appel au départ de l'installation.

Les circuits détecteurs 2 et 3 font eux-mêmes partie d'un circuit plus complexe 4, de contrôle et de commande, permettant notamment et comme on le verra ci-après d'assurer dans des circonstances déterminées l'ouverture du contact 5 d'un relais 6 prévu sur l'un des fils de la ligne et réalisant le branchement temporaire sur celle-ci d'un autre circuit 7 de composition automatique du code d'accès, propre à activer l'appareil de connexion de la ligne avec le central. A l'intérieur du boîtier 1 est enfin prévu un bloc d'alimentation électrique 8, fournissant aux différents circuits 2, 3, 4 et 7 une tension d'alimentation continue, notamment de 12 volts, ce bloc incorporant en outre une pile de 4,5 volts, destinée à alimenter temporairement le circuit de composition du code 7 pour les raisons précisées ultérieurement. Le bloc 8 est lui-même raccordé par un connecteur approprié 9 à la tension électrique du secteur.

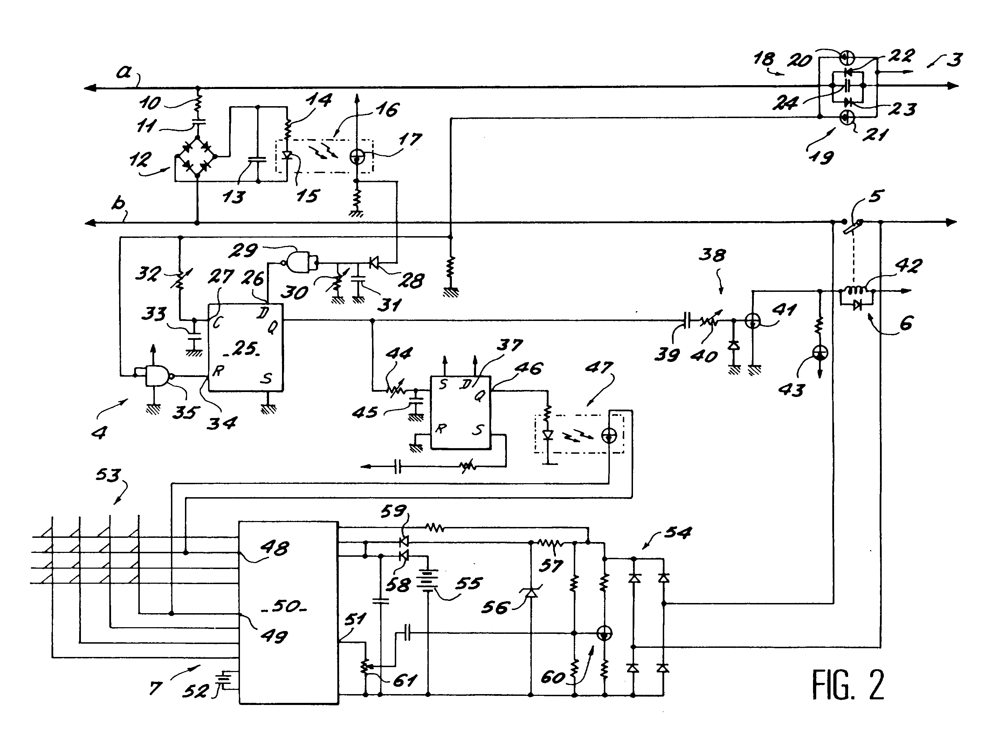

La Figure 2 illustre de façon plus détaillée un premier mode de réalisation des principaux circuits du dispositif, montés à l'intérieur du boîtier.

Comme on le voit sur ce schéma, le circuit 2 de détection de la tension alternative de sonnerie comporte une résistance 10 et un condensateur 11, traversés par le courant alternatif à 50 Hz envoyé sur la ligne lors d'un appel arrivant, avant d'alimenter un pont à quatre diodes 12. A la sortie de celui-ci, la tension double alternance est filtrée par un condensateur 13, avant d'alimenter, au travers d'une résistance 14, la diode d'entrée 15 d'un photocoupleur 16. Le courant créé dans le circuit lors d'une sonnerie d'appel permet la conduction du phototransistor 17 de ce photocoupleur au rythme des trains de sonnerie, en manifestant donc à chacun de ces derniers, la présence d'un courant transmis au circuit de commande et de contrôle 4.

Le circuit 3 de détection du courant continu dans la ligne, établi lors d'une conversation téléphonique notamment, est constitué de deux photocoupleurs, respectivement 18 et 19, comportant deux diodes d'entrée 22, 23, ces dernières étant montées en anti-parallèle et en sortie de deux phototransistors 20 et 21 en parallèle , de telle sorte que la conduction de l'une quelconque de ces diodes se produise quelles que soient les polarités relatives des deux fils a et b de la ligne. En parallèle sur les diodes 22 et 23 est prévu un condensateur 24 qui permet de laisser passer le courant de sonnerie à 50 Hz transmis sur la ligne lors d'un appel arrivant, en le limitant à la traversée de ces diodes, sans affaiblir les signaux représentatifs du courant de ligne lors d'une conversation, dont la fréquence est comprise entre environ 300 et 3 400 Hz.

Le circuit 4 de contrôle et de commande est essentiellement constitué par une première bascule 25 qui reçoit sur deux entrées, respectivement 26 et 27, les signaux de sortie des circuits de détection 2 et 3 décrits ci-dessus. La sortie du circuit 2 est acheminée vers l'entrée 26 par l'intermédiaire d'une diode 28 et d'une porte inverseuse 29, après traversée d'un circuit de temporisation constitué d'une résistance ajustable 30 et d'un condensateur 31. Dans ces conditions, lorsqu'un signal à l'état 1 est délivré par le circuit 2, notamment pour chaque sonnerie d'appel, la porte 29 met l'entrée 26 à 0. Le circuit de temporisation permet par ailleurs de faire en sorte que cette entrée 26 reste à 0 entre les trains de sonnerie successifs.

De la même façon, l'entrée 27 de la bascule 25, qui constitue l'entrée d'horloge, reçoit le signal de sortie du circuit 3 de détection de courant dans la ligne, après traversée d'une résistance 32 et d'un condensateur 33. Ce signal alimente également l'entrée 34 de "Reset" ou remise à 0, après traversée d'une autre porte inverseuse 35, de telle sorte que, en présence d'un signal à l'état 1 provenant du circuit 3, cette entrée soit à l'état 0 ou vice-versa.

La sortie 36 de la bascule 25 est donc à l'état de l'entrée 26, au moment où le signal provenant du circuit de détection 3 arrive à l'entrée 27, la sonnerie précédant nécessairement le décroché du poste et l'établissement du courant de ligne. Dès lors, la sortie 36 qui était à l'état 0 initialement, pendant les trains de sonnerie (et maintenue dans cet état entre ces trains par le circuit de temporisation 30-31) rend la bascule 25 inactive, le circuit de contrôle et de commande 4 étant lui-même inactif. En d'autres termes, dans ce cas, le système est totalement transparent pour les appels arrivant sur la ligne, quelle que soit leur origine.

A la fin de la communication prise par l'abonné, lorsque celui-ci raccroche son poste, le signal issu du circuit de détection 3 passe à l'état 0, donc le signal inversé sur l'entrée 34 à l'état 1, reconfirmant l'état de la bascule jusqu'à l'arrivée d'un nouvel appel.

A noter que le dispositif exige seulement que le réglage du circuit de temporisation 32, 33 entraîne un retard du signal issu du circuit de détection 3 par rapport à la retombée du signal fourni par le circuit de détection 2, de l'état 1 à l'état 0, entre chaque train de sonnerie ; en l'absence d'un tel retard en effet, le dispositif provoquerait un changement d'état de la bascule, l'entrée 26 passant à l'état 1.

Le dispositif fonctionne en revanche de façon différente lorsqu'il est en présence d'un appel au départ, l'abonné décrochant son poste ou terminal pour former le numéro d'appel du correspondant qu'il cherche à joindre.

Dans ce cas, le signal provenant du circuit 2 est à l'état 0, l'entrée 26 de la bascule étant par conséquent à l'état 1 après traversée de la porte inverseuse 29. Le décrochage du poste téléphonique par l'abonné entraîne la création d'un courant dans la ligne d'où l'établissement d'un signal à la sortie du circuit de détection 3 à l'état 1, passant à l'état 0 à l'entrée 34 de la bascule, après traversée de l'autre porte inverseuse 35. La commande Reset est donc inactive.

Après la fin de la temporisation créée par la résistance 32 et le condensateur 33, l'entrée d'horloge 27 reçoit le signal à l'état 1 issu du circuit détecteur 3. Il en résulte un changement d'état de la bascule, ses entrées 26 et 27, à l'état 1, amenant sa sortie 36 également à l'état 1, qui va se conserver jusqu'à la fin de la communication téléphonique initiée par l'abonné. A cet instant, le signal issu du circuit détecteur 3 passe à l'état 0, donc à l'état 1 sur l'entrée 34 qui active la remise à 0 de la bascule.

Le passage de la bascule de l'état inactif à l'état actif, provoque divers évènements successifs dans le circuit 4 de contrôle et de commande, puis dans le circuit 7 de composition du code qui lui est réuni à travers une seconde bascule 37.

En premier lieu, le signal apparaissant sur la sortie 36 de la bascule 35, actionne un circuit d'amplification 38, comportant un condensateur 39 et une résistance ajustable 40, et un étage à transistor 41, celui-ci étant conducteur pendant la durée de la charge du condensateur, de manière à délivrer sur la bobine 42 du relais 6, une impulsion de courant provoquant l'ouverture du contact 5 monté sur l'un des fils de la ligne et mettant en série avec celle-ci le circuit 7 de composition du code. Une diode électroluminescente 43 permet de contrôler la période pendant laquelle le contact 5 est ouvert, la retombée de ce contact, shuntant le circuit 7, correspondant à l'extinction de cette diode.

Simultanément, le signal issu de la première bascule 25 vient déclencher la seconde bascule 37, après un retard adéquat créé par un nouveau circuit temporisateur, formé d'une résistance ajustable 44 et d'un condensateur 45, ce retard étant nécessaire pour s'assurer que le code d'accès qui va être élaboré soit fourni à la ligne uniquement après que le contact 5 ait été ouvert. De même, il convient que la durée de la charge du condensateur 39 pendant laquelle le transistor 41 conduit, en provoquant l'ouverture du contact 5, soit suffisante pour que le circuit 7 dispose du temps nécessaire à l'élaboration et l'envoi de ce code sur la ligne.

Le signal à la sortie 46 de la bascule 37 (câblée en monostable, de durée calibrée par un ensemble résistance-condensateur), réalisé dans les conditions précitées, traverse alors un photocoupleur 47 (analogue au photocoupleur 16 du circuit 2 par exemple), aménagé de telle sorte qu'il vienne actionner deux entrées présélectionnées, repérées 48 et 49, appartenant à un circuit spécialisé 50, propre à fournir sur sa sortie 51 un signal codé, de préférence élaboré en code dit DTMF (Dual Tone Multi Frequencies), classique dans les appareils modernes de communication téléphonique, chaque chiffre du code correspondant à l'émission simultanée de deux sons de fréquences données, préalablement identifiées.

Le circuit 50 comporte un quartz oscillateur 52 et est associé à un clavier 53, schématiquement représenté, permettant d'initialiser le code choisi (notamment à quatre chiffres ou plus), ce code étant alors stocké dans une mémoire du circuit 50 et fourni en séquence sur la sortie 51 de celui-ci, précisément lorsque le signal issu du photocoupleur 47 arrive sur ses entrées 48 et 49.

Le circuit 50 comporte également, dans sa liaison avec les bornes du contact 5 monté sur la ligne, un pont de diodes 54 qui permet de s'affranchir de toute contrainte de polarité sur la ligne pour l'alimentation électrique du circuit 50. En outre, celui-ci est réuni à un circuit, permettant de l'alimenter sous 4,5 volts grâce à la limitation d'une diode Zener 56 en série avec une résistance 57, à travers une diode 59. Une pile 55 permet notamment de conserver l'alimentation du circuit 50 par la diode 58 et en particulier de la mémoire de stockage du code d'accès, en dehors des périodes d'appel et de mise sous tension du circuit 50 par la ligne elle-même.

Les sons successifs de fréquences différenciées correspondant au code stocké dans la mémoire du circuit spécialisé 50, sont injectés dans la ligne via un étage à transistor 60 qui se comporte comme une résistance variable modulée par les signaux correspondant aux chiffres successifs identifiant ce code, insérée en série sur la ligne téléphonique. Un potentiomètre 61, monté à la sortie du circuit 50, permet d'ajuster le niveau des signaux DTMF à une valeur adéquate, notamment telle que ces signaux soient susceptibles d'être aisément reconnus par l'appareil de connexion monté au central de commutation pour mettre la ligne en service si le code émis est correct et en conséquence provient bien de l'installation de l'abonné et non d'un branchement litigieux.

Bien entendu, il est évident que la séquence des chiffres correspondant au code d'accès, programmée dans la mémoire du circuit 50, peut être modifiée autant de fois que désiré, en agissant sur le clavier 53, pour introduire à chaque fois une séquence différente. En revanche, une fois stockée, cette séquence peut être délivrée sur la ligne par une seule opération et notamment l'envoi du signal de sortie de la bascule 37 sur les touches 48 et 49, de la manière réalisée de façon habituelle sur un poste téléphonique quelconque, par actionnement de la touche "Bis" qui recompose automatiquement le dernier numéro formé ou encore d'une ou plusieurs autres touches du clavier, permettant d'accéder à un jeu de mémoires séparées, contenant chacune un numéro d'appel prédéterminé et enregistré.

Une telle disposition impose naturellement que, à chaque changement du code d'accès choisi et imposé à partir du clavier 53, soit réalisé un changement équivalent dans l'appareil de connexion prévu au central afin de reconnaître, dans tous les cas, le code choisi et uniquement celui-ci.

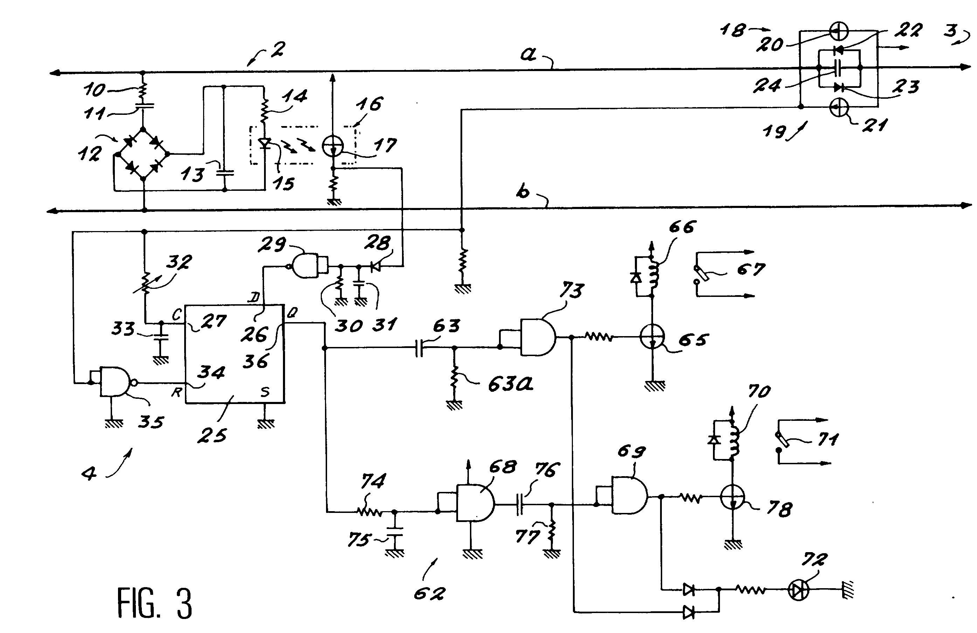

Dans une variante de réalisation illustrée sur la Figure 3, on retrouve à l'identique les circuits de détection 2 et 3 et, pour partie, le circuit de contrôle et de commande 4 avec la bascule 25, les entrées 26, 27 et 34 de celle-ci, ainsi que sa sortie 36, les portes inverseuses 29 et 35 et les circuits de temporisation 30-31 et 32-33.

Dans ce cas cependant, la sortie 36 de la bascule 25 n'est plus réunie à une seconde bascule mais à un circuit de conception différente, schématiquement désigné dans son ensemble sous la référence 62, le circuit de composition du code, envisagé dans la première variante, qui est commun pour l'ensemble de l'installation téléphonique, étant cette fois remplacé par un jeu de circuits différents, chacun de ces circuits étant implanté dans un des postes récepteurs individuels de l'installation, chaque poste fonctionnant en parallèle.

Dans cette variante, le clavier permettant l'élaboration d'un code d'accès, de même que la mémoire de stockage de ce code, sont directement constitués par ceux qui appartiennent au poste considéré, la formation de la séquence des chiffres étant réalisée à partir du clavier de numérotation et sa mémorisation dans la mémoire de l'appareil lui-même, ce qui conduit à un coût d'installation plus faible, et en particulier à l'absence de câblage spécifique sur l'installation téléphonique existante. En revanche, seul le poste ou terminal ainsi aménagé est susceptible de fournir le code d'accès, les autres postes de l'installation en étant en principe dépourvus, sauf à les munir chacun du dispositif selon l'invention.

Dans cet exemple de réalisation, les contacts de sortie 67 et 71 commandés à partir de la sortie 36 de la bascule 25, sont directement connectés au clavier du poste, sur les sorties des touches de celui-ci permettant d'activer un numéro mémorisé précédemment.

Dès lors, au lieu d'activer une seule touche (correspondant à l'envoi du signal de sortie de la seconde bascule 37 sur les entrées 48 et 49 du circuit 50, comme dans la variante précédente), il devient nécessaire d'activer successivement la touche d'accès mémoire dite "page" du terminal, puis une touche correspondant au numéro de la mémoire réservée au code d'accès préprogrammé.

Dans cette éventualité, il convient donc d'effectuer sur le poste mais de façon automatique, deux actions successives, simulant l'enfoncement de deux touches distinctes appropriées, respectivement pour accéder au registre des mémoires du poste, puis adresser et sélectionner celle de ces mémoires où le code a été préalablement stocké. Dans ce but, le circuit 62 comporte un premier condensateur 63 et une résistance 64, formant temporisateur, acheminant un signal sur l'entrée d'une porte ET 73, délivrant à son tour par l'intermédiaire d'un transistor d'amplification 65, un signal d'impulsion à la bobine d'un relais 66 commandant la fermeture du contact 67 de la touche "page".

A partir du même signal issu de la sortie 36 mais délivré à travers deux nouveaux temporisateurs résistance-condensateur (74, 75 d'une part, 76, 77 d'autre part) associés à deux portes ET 68, 69, un relais 70 est alimenté par une impulsion commandant de la même façon le contact 71 de la touche mémoire appropriée. Les constantes de temps de ces temporisateurs sont ajustées de telle sorte que le contact 71 de la touche mémoire libérant l'envoi du code stocké, ne puisse être mis en oeuvre que postérieurement au contact 67 de la première touche d'accès à la mémoire. Une diode électroluminescente 72 témoigne du déroulement satisfaisant du cycle enclenché, dont la durée correspond au cumul des durées des impulsions, respectivement envoyées aux relais 66, puis 70.

Bien entendu, il va de soi que l'invention ne se limite pas aux exemples de réalisation plus spécialement décrits et représentés ci-dessus ; elle en embrasse au contraire toutes les variantes. En particulier, on pourrait utiliser d'autres moyens pour élaborer le code d'accès et non exclusivement le codage DTMF standard, notamment en utilisant un système à code décimal, pour autant que le poste récepteur et son clavier soient adaptés à cette solution. De même, on pourrait prévoir que l'appareil de connexion sollicité par le décroché d'un poste ou terminal de l'installation envoie lui-même un signal d'invitation à émettre le code d'accès, le dispositif détectant ce signal et déclenchant à partir de celui-ci les circuits 4 de contrôle et de commande et 7 de composition du code, les circuits de détection de la tension de sonnerie et de courant d'installation étant substitués par un détecteur de tonalité adapté.

## Revendications

1. Dispositif de contrôle de l'accès en ligne, pour une installation privée d'abonné au téléphone comprenant une ligne (a, b) raccordée à au moins un poste ou terminal appartenant à ladite installation, comportant un détecteur (2) de tension de sonnerie d'appel dudit poste et un détecteur (3) du courant dans la ligne, créé lorsque ledit poste est décroché, ces détecteurs étant respectivement montés en parallèle et en série sur la ligne, le dispositif comportant en outre un circuit (4) de contrôle et de commande, adapté à reconnaître et différencier, au moyen d'un code confidentiel, un appel à l'arrivée acheminé sur la ligne à destination de l'abonné toujours transmis au poste récepteur, et un appel au départ émanant de l'abonné, caractérisé en ce que, pour un tel appel au départ et pour celui-ci seulement, un contact (5) d'un relais (6) monté sur la ligne est automatiquement ouvert en introduisant en série sur celle-ci un circuit (7) de composition d'un code d'accès prédéterminé, stocké dans une mémoire et propre à commander le basculement d'un appareil de connexion raccordant la ligne au central téléphonique, l'envoi dudit code d'accès précédant dans le temps la formation d'un numéro d'appel à partir du poste ou terminal, le signal correspondant pouvant alors être transmis sur la ligne vers ledit central.

2. Dispositif selon la revendication 1, caractérisé en ce que le circuit de détection (2) de la tension de sonnerie comporte un condensateur (11) et une résistance (10) en série avec un pont de diodes (12), dont le signal de sortie à double alternance est filtré par un condensateur (13), la tension résultante alimentant au travers d'une résistance (14) la diode d'entrée (15) d'un photocoupleur (16) dont le phototransistor (17) conduit au rythme des signaux de la sonnerie d'appel.

3. Dispositif selon la revendication 1, caractérisé en ce que le circuit (3) de détection du courant de ligne est constitué de deux photocoupleurs (18, 19) à phototransistors (20, 21), dont les diodes d'entrée (22, 23) sont montées en anti-parallèle, avec en parallèle un condensateur laissant passer les courants de sonnerie et de conversation sans les affaiblir, leurs sorties étant reliées en parallèle, de telle sorte que la conduction de l'une ou l'autre diode selon la polarité relative des fils (a, b) de la ligne, soit assurée, en fournissant un signal de sortie au circuit de contrôle et de commande.

4. Dispositif selon l'une quelconque des revendications 1 à 3, caractérisé en ce que l'ensemble formé par les circuits de détection de tension de sonnerie (2), de détection de courant de ligne (3), de contrôle et de commande (4), déclenchant le circuit (7) de composition du code d'accès au décroché du poste ou terminal, est un circuit indépendant et commun à l'ensemble des postes ou terminaux de l'installation, montés en aval.

5. Dispositif selon la revendication 4, caractérisé en ce que le circuit de contrôle et de commande est monté avec les circuits de détection de tension de sonnerie (2) et de courant de ligne (3), dans un ensemble raccordé au point de liaison de la ligne et de l'installation téléphonique de l'abonné ou au niveau de la première prise de conjoncteur, en aval de l'arrivée de la ligne (a, b) à l'installation, les divers postes de celle-ci étant alors en série.

6. Dispositif selon la revendication 4, caractérisé en ce que chaque poste ou terminal de l'installation comprend un circuit (4) de contrôle et de commande, apte à fournir le code d'accès à la ligne à partir d'une mémoire intégrée dans chaque poste.

7. Dispositif selon l'une quelconque des revendications 4 à 6, caractérisé en ce que le circuit (4) de contrôle et de commande comporte au moins une bascule (25), associée à un circuit de temporisation (30, 31) et agencée de telle sorte que, en présence d'un signal issu du circuit (2) détecteur de tension de sonnerie, puis d'un signal ultérieur provenant du circuit (3) détecteur de courant de ligne, caractérisant un appel à l'arrivée, ladite bascule soit inerte, les circuits étant transparents à l'égard d'un tel appel.

8. Dispositif selon la revendication 7, caractérisé en ce que la bascule (25) du circuit (4) de contrôle et de commande est aménagée de telle sorte que, en l'absence d'un signal issu du circuit (2) détecteur de tension de sonnerie et en présence d'un signal provenant du circuit (3) détecteur de courant de ligne, caractérisant un appel au départ de l'installation, elle fournisse un signal qui, après amplification, commande le relais (6) ouvrant le contact (5) monté dans la ligne pour actionner le circuit (7) de composition du code à envoyer sur la ligne, préalablement à la composition du numéro d'appel.

9. Dispositif selon l'une des revendications 7 ou 8, caractérisé en ce que le circuit (7) de composition du code d'accès est commandé par une seconde bascule (37) du circuit de contrôle et de commande, en série avec la première (25) et également associée avec un circuit de temporisation (44, 45) tel que le code ne soit délivré sur la ligne qu'après l'ouverture du contact (5) du relais (6) monté sur la ligne, ce code étant élaboré dans un circuit spécialisé (50), alimenté par le courant de ligne et comprenant une mémoire de stockage, selon la numérotation dite DTMF (Dual Tone Multi Frequencies).

10. Dispositif selon la revendication 9, caractérisé en ce que le circuit (7) de composition du code d'accès comprend un clavier de commande (53) pour introduire en mémoire le code choisi, préalablement déterminé.

11. Dispositif selon l'une des revendications 9 ou 10, caractérisé en ce que le circuit (7) de composition du code comprend une pile (55) d'alimentation propre à permettre la conservation de ce code mémorisé, en dehors des périodes d'appel.

12. Dispositif selon l'une quelconque des revendications 1 à 11, caractérisé en ce que le circuit (7) de composition du code d'accès comporte un amplificateur des fréquences DTMF (60), disposant d'un potentiomètre d'ajustage (61) du niveau du signal, de telle sorte que celui-ci puisse être convenablement reçu par l'appareil de connexion raccordant la ligne au central téléphonique.

13. Dispositif selon l'une quelconque des revendications 1 à 3, caractérisé en ce que le circuit (7) de composition du code d'accès est intégré à chaque poste ou terminal et est associé à deux temporisateurs à portes ET en parallèle (64, 68-69), délivrant des signaux décalés dans le temps avec des intervalles ajustables par des ensembles résistances-capacités (63, 64 - 74, 75 - 76, 77), ces signaux étant amplifiés chacun dans un étage à transistor (65, 78) pour actionner successivement et par impulsions les relais (66, 70), fermant l'un après l'autre les contacts (67, 71) des touches d' envoi de la numérotation du code d'accès prédéterminé mémorisé.

14. Dispositif selon la revendication 9, caractérisé en ce que le circuit de contrôle et de commande (4) comporte un témoin visuel (43, 72), permettant de contrôler le déroulement du cycle de mise en oeuvre du dispositif.

## Patentansprüche

1. Kontrollvorrichtung zum Leitungszugang für eine private Fernsprechteilnehmeranlage mit einer Leitung (a, b), die an wenigstens einen Apparat oder ein Terminal angeschlossen ist, das zu der Anlage gehört, mit einem Detektor (2) für die Tonrufspannung des Apparats sowie einem Detektor (3) für den Strom in der Leitung, der bei Abnehmen des Apparats erzeugt wird, wobei diese Detektoren an der Leitung parallel bzw. in Reihe angeordnet sind, wobei die Vorrichtung ferner eine Kontroll- und Steuerschaltung (4) aufweist, die mittels eines vertraulichen Codes einen hereinkommenden Anruf, der auf der Leitung in Richtung des Teilnehmers geleitet und immer zu dem Empfängerapparat übertragen wird, sowie einen von dem Teilnehmer abgehenden Anruf erkennen und differenzieren kann, dadurch gekennzeichnet, daß für einen solchen abgehenden Anruf und nur für diesen ein Kontakt (5) eines an der Leitung angebrachten Relais (6) automatisch geöffnet wird, indem daran in Reihe eine Schaltung (7) zur Eingabe eines vorbestimmten Zugangscodes eingeführt wird, der in einem Speicher gespeichert ist und das Kippen eines Anschlußgeräts steuern kann, das die Leitung mit der Fernsprechzentrale verbindet, wobei das Senden des Zugangscodes zeitlich der Bildung einer Rufnummer ausgehend von dem Apparat oder Terminal vorausgeht und das entsprechende Signal dann auf der Leitung zu der Zentrale übertragen werden kann.

2. Vorrichtung nach Anspruch 1, dadurch gekennzeichnet, daß die Erfassungsschaltung (2) für die Tonrufspannung einen Kondensator (11) und einen Widerstand (10) in Reihe mit einer Diodenbrücke (12) aufweist, deren Ausgangssignal mit doppelter Halbperiode von einem Kondensator (13) gefiltert wird, wobei die resultierende Spannung über einen Widerstand (14) die Eingangsdiode (15) eines Optokupplers (16) versorgt, dessen Phototransistor (17) im Rhythmus der Signale des Tonrufes leitet.

3. Vorrichtung nach Anspruch 1, dadurch gekennzeichnet, daß die Schaltung (3) zum Erfassen des Leitungsstroms aus zwei Optokupplern (18, 19) mit Phototransistoren (20, 21) besteht, deren Eingangsdioden antiparallel geschaltet sind, wobei ein Kondensator parallel liegt, der die Tonruf- und Gesprächsströme durchläßt, ohne sie abzuschwächen, und wobei ihre Ausgänge parallelgeschaltet sind, so daß der leitende Zustand der einen oder anderen Diode je nach der relativen Polarität der Drähte (a, b) der Leitung sichergestellt wird, indem ein Ausgangssignal zur Kontroll- und Steuerschaltung geliefert wird.

4. Vorrichtung nach einem der Ansprüche 1 bis 3, dadurch gekennzeichnet, daß die durch die Schaltungen für die Erfassung der Tonrufspannung (2), zur Erfassung des Leitungsstroms (3), zur Kontrolle und Steuerung (4) gebildete Einheit, die die Schaltung (7) zum Wählen des Zugangscodes beim Abnehmen des Apparats oder Terminals auslöst, eine unabhängige Schaltung ist, die der Einheit der Apparate oder Terminals der Anlage gemeinsam ist, die unterhalb geschaltet sind.

5. Vorrichtung nach Anspruch 4, dadurch gekennzeichnet, daß die Kontroll- und Steuerschaltung mit den Schaltungen zur Erfassung der Tonrufspannung (2) und des Leitungsstroms (3) in einer Einheit angebracht ist, die am Verbindungspunkt der Leitung und der Fernsprechanlage des Teilnehmers oder auf Höhe des ersten Schalterabgriffs angeschlossen ist, und zwar unterhalb des Eintritts der Leitung (a, b) in die Anlage, wobei deren verschiedene Apparate dann in Reihe liegen.

6. Vorrichtung nach Anspruch 4, dadurch gekennzeichnet, daß jeder Apparat oder jedes Terminal der Anlage eine Kontroll- und Steuerschaltung (4) aufweist, die den Zugangscode zur Leitung ausgehend von einem in jedem Apparat integrierten Speicher liefern kann.

7. Vorrichtung nach einem der Ansprüche 4 bis 6, dadurch gekennzeichnet, daß die Kontroll- und Steuerschaltung (4) wenigstens eine Kippschaltung (25) aufweist, die einer Verzögerungsschaltung (30, 31) zugeordnet und derart angeordnet ist, daß in Gegenwart eines Signals aus der Schaltung (2) zur Ruftonerfassung, dann eines späteren Signals aus der Schaltung (3) zur Erfassung des Leitungsstroms, das einen hereinkommenden Anruf kennzeichnet, die Kippschaltung inert ist, wobei die Schaltungen gegenüber einem solchen Anruf durchlässig sind.

8. Vorrichtung nach Anspruch 7, dadurch gekennzeichnet, daß die Kippschaltung (25) der Kontroll- und Steuerschaltung (4) derart angeordnet ist, daß sie bei Abwesenheit eines Signals aus der Schaltung (2) zur Ruftonerfassung und in Gegenwart eines Signals aus der Schaltung (3) zur Erfassung des Leitungsstroms, das einen von der Anlage abgehenden Anruf kennzeichnet, ein Signal liefert, das nach der Verstärkung das Relais (6) steuert, das den in der Leitung angebrachten Kontakt (5) öffnet, um die Schaltung (7) zum Wählen des auf die Leitung zu sendenden Codes vor dem Wählen der Rufnummer zu betätigen.

9. Vorrichtung nach einem der Ansprüche 7 oder 8, dadurch gekennzeichnet, daß die Schaltung (7) zum Wählen des Zugangscodes von einer zweiten Kippschaltung (37)der Kontroll- und Steuerschaltung gesteuert wird, die mit der ersten (25) in Reihe liegt und ebenfalls einer Verzögerungsschaltung (44, 45) zugeordnet ist, so daß der Code erst nach dem Öffnen des Kontakts (5) des Relais (6) auf die Leitung abgegeben wird, das an der Leitung angebracht ist, wobei dieser Code in einer spezialisierten Schaltung (50) erarbeitet wird, die von dem Leitungsstrom versorgt wird und einen Speicher aufweist, und zwar nach dem sogenannten DTMF-Wählvorgang (Dual Tone Multi Frequencies).

10. Vorrichtung nach Anspruch 9, dadurch gekennzeichnet, daß die Schaltung (7) zum Wählen des Zugangscodes eine Steuertastatur (53) aufweist, um den vorbestimmten gewählten Code in den Speicher einzugeben.

11. Vorrichtung nach einem der Ansprüche 9 oder 10, dadurch gekennzeichnet, daß die Schaltung (7) zum Wählen des Codes eine Versorgungsbatterie (55) aufweist, mit der dieser gespeicherte Code außerhalb der Rufperioden erhalten bleiben kann.

12. Vorrichtung nach einem der Ansprüche 1 bis 11, dadurch gekennzeichnet, daß die Schaltung (7) zum Wählen des Zugangscodes einen Verstärker (60) für die DTMF-Frequenzen aufweist, der über ein Potentiometer (61) zum Einstellen des Pegels des Signals verfügt, so daß dieses geeignet von dem Anschlußgerät empfangen werden kann, das die Leitung mit der Fernsprechzentrale verbindet.

13. Vorrichtung nach einem der Ansprüche 1 bis 3, dadurch gekennzeichnet, daß die Schaltung (7) zum Wählen des Zugangscodes in jeden Apparat oder jedes Terminal integriert und zwei Verzögerungsschaltungen mit UND-Gliedern (64, 68-69) in Parallelschaltung zugeordnet ist, die zeitversetzte Signale mit Intervallen abgibt, die von den Einheiten (63, 64 - 74, 75 - 76, 77) aus Widerständen-Kapazitäten einstellbar sind, wobei diese Signale jeweils in einer Transistorstufe (65, 78) verstärkt werden, um nacheinander und durch Impulse die Relais (66, 70) zu betätigen, die nacheinander die Kontakte (67, 71) von Tasten zum Senden des gewählten Zugangscodes schließen, der vorherbestimmt und gespeichert ist.

14. Vorrichtung nach Anspruch 9, dadurch gekennzeichnet, daß die Kontroll- und Steuerschaltung (4) eine visuelle Anzeige (43, 72) aufweist, mit der der Ablauf des Verwendungszyklus der Vorrichtung kontrolliert werden kann.

## Claims

1. Device for controlling access to a line, for a telephone subscriber's private installation, comprising a line (a, b) connected to at least one hand-set belonging to said installation, comprising a detector (2) for the voltage of the call bell of said hand-set and a detector (3) for the current in the line, created when said receiver is lifted, these detectors being respectively connected in parallel and in series in the line, the device moreover comprising a checking and control circuit (4), adapted to recognise and differentiate, by means of a confidential code, between an incoming call routed on the line to the subscriber still transmitted to the hand-set, and an outgoing call from the subscriber, characterised in that, for such an outgoing call and for this call solely, a contact (5) of a relay (6) connected in the line is automatically opened by introducing in series in the latter a circuit (7) for dialling a predetermined access code, stored in a memory and able to control the tripping of a connection apparatus connecting the line to the telephone exchange, the sending of said access code preceding in time the dialling of a call number from the hand-set, the corresponding signal thus being able to be transmitted on the line to said exchange.

2. Device according to Claim 1, characterised in that the circuit (2) for detecting the voltage of the bell comprises a capacitor (11) and a resistor (10) in series with a bridge of diodes (12), whereof the double alternating output signal is filtered by a capacitor (13), the resulting voltage supplying by way of a resistor (14) the input diode (15) of a photo-coupler (16) whereof the photo-transistor (17) leads to the rhythm of the signals of the call bell.

3. Device according to Claim 1, characterised in that the circuit (3) for detecting the line current is constituted by two photo-couplers (18, 19) with photo-transistors (20, 21), whereof the input diodes (22, 23) are connected in anti-parallel, with in parallel a capacitor allowing the bell and conversation currents to pass without attenuating them, their outputs being connected in parallel, so that the conduction of one or other diode according to the relative polarity of the wires (a, b) of the line, is ensured, by supplying an output signal to the checking and control circuit.

4. Device according to one of Claims 1 to 3, characterised in that the arrangement formed by the circuits for detecting the voltage of the bell (2), for detecting the line current (3), for checking and controlling (4), tripping the circuit (7) for dialling the access code when the receiver is lifted, is a circuit which is independent and common to all the hand-sets of the installation, connected downstream.

5. Device according to Claim 4, characterised in that the checking and control circuit is mounted with the circuit (2) for detecting the voltage of the bell and circuit (3) for detecting the line current, in an arrangement connected to the connection point of the line and telephone installation of the subscriber or at the level of the first switch of the circuit-closer, downstream of the arrival point of the line (a, b) at the installation, the various hand-sets of the latter thus being in series.

6. Device according to Claim 4, characterised in that each hand-set of the installation comprises a checking and control circuit (4), able to supply the access code to the line from a memory integrated in each hand-set.

7. Device according to one of Claims 4 to 6, characterised in that the checking and control circuit (4) comprises at least one flip-flop (25), associated with a delay circuit (30, 31) and arranged so that, in the presence of a signal coming from the circuit (2) for detecting the voltage of the bell, then of a subsequent signal coming from the circuit (3) detecting the line current, characterising an incoming call, said flip-flop is inactive, the circuits being open with regard to such a call.

8. Device according to Claim 7, characterised in that the flip-flop (25) of the checking and control circuit (4) is arranged so that, in the absence of a signal coming from the circuit (2) for detecting the voltage of the bell and in the presence of a signal coming from the circuit (3) for detecting the line current, characterising an outgoing call from the installation, it supplies a signal which, after amplification, controls the relay (6) opening the contact (5) connected in the line in order to actuate the circuit (7) for dialling the code to be sent on the line, prior to dialling the call number.

9. Device according to one of Claims 7 or 8, characterised in that the circuit (7) for dialling the access code is controlled by a second flip-flop (37) of the checking and control circuit, in series with the first (25) and also associated with a delay circuit (44, 45) such that the code is delivered on the line solely after the opening of the contact (5) of the relay (6) connected in the line, this code being processed in a specialised circuit (50), supplied by the line current and comprising a storage memory, according to the so-called DTMF (dual tone multi frequencies) numbering.

10. Device according to Claim 9, characterised in that the circuit (7) for dialling the access code comprises a control keyboard (53) for introducing the chosen, previously determined code, into the memory.

11. Device according to one of Claims 9 or 10, characterised in that the circuit (7) for dialling the code comprises a power supply battery (55) able to allow the preservation of this memorised code, outside call periods.

12. Device according to one of Claims 1 ta 11, characterised in that the circuit (7) for dialling the access code comprises a DTMF frequency amplifier (60), comprising a potentiometer (61) for adjusting the level of the signal, so that the latter is able to be appropriately received by the connection apparatus connecting the line to the telephone exchange.

13. Device according to one of Claims 1 to 3, characterised in that the circuit (7) for dialling the access code is integrated in each hand-set and is associated with two time-lag members comprising AND-gates in parallel (64, 68-69), supplying signals having a time-lag with intervals able to be adjusted by resistor-capacitor arrangements (63, 64-74, 75-76, 77), these signals each being amplified in a stage comprising a transistor (65, 78) in order to actuate successively and by pulses the relays (66, 70), closing one after the other the contacts (67, 71) of the keys for sending the numbering of the memorised predetermined access code.

14. Device according to Claim 9, characterised in that the checking and control circuit (4) comprises a visual indicator (43, 72), making it possible to check the implementation of the operating cycle of the device.
